# EUROPEAN PATENT APPLICATION

(11) **EP 2 573 416 A1**
(43) Date of publication of application: **27.03.2013**
(21) Application number: 12185034.1
(22) Date of filing: 19.09.2012
(51) Int. Cl.: F16D 27/112

(54) **Electromagnetic clutch**

(30) Priority: 26.09.2011 JP 2011209378
(71) Applicant: JTEKT CORPORATION, Osaka-shi Osaka 542-8502 (JP)
(72) Inventor: Onitake, Minoru, Osaka-shi,, Osaka 542-8502 (JP); Takuno, Hiroshi, Osaka-shi,, Osaka 542-8502 (JP); Ando, Kazuya, Osaka-shi,, Osaka 542-8502 (JP); Korenaga, Kenji, Osaka-shi,, Osaka 542-8502 (JP)
(74) Representative: TBK

(57) **Abstract**

An electromagnetic clutch 1 includes: a first cam member 10 having a first cam surface 10a; a second cam member 20 having a second cam surface 20a facing the first cam surface 10a; a coned disc spring 3 that urges the second cam member 20 such that the first and second cam surfaces are separated from each other; a clutch plate 4 that contacts the second cam member 20 due to urging force of the urging member 3, and generates friction force between the clutch plate 4 and the second cam member 20; and an electromagnetic coil 61 that generates magnetic force with which the second cam member 20 is separated from the clutch plate 4 against the urging force of the urging member 3. The first cam surface 10a and the second cam surface 20a generate thrust force by which the second cam member 20 is pushed against the friction member, through relative rotation between the first cam member 10 and the second cam member 20 due to the friction force.

## Description

### BACKGROUND OF THE INVENTION

### 1. Field of the Invention

The invention relates generally to an electromagnetic clutch, and more specifically to an electromagnetic clutch that includes a cam mechanism.

### 2. Description of Related Art

There is a conventional vehicle automatic transmission system that includes a belt-type continuously variable transmission (CVT). In the vehicle automatic transmission system, an output of a hydraulic supply device, which supplies hydraulic fluid to the transmission, is switched with the use of a clutch (see Japanese Patent Application Publication No. 2005-226802 (JP 2005-226802 A)).

The transmission system described in JP 2005-226802 A includes a first pump and a second pump. The first pump constantly operates while an engine is running. The second pump is arranged downstream of the first pump, and transmits the torque of the engine via the clutch. At the time of a speed ratio change that requires a high hydraulic pressure, the clutch is engaged, and hydraulic pressure boosted by the first pump and the second pump is supplied to the transmission.

An electromagnetic clutch described in Japanese Patent Application Publication No. 2011-144835 (JP 2011-144835 A) is suitable for the above-described use. The electromagnetic clutch includes a first cam member, a second cam member, a friction engaged member, an electromagnetic coil, and a coned disc spring. The first cam member has a first cam surface. The second cam member has a second cam surface that faces the first cam surface. The friction engaged member contacts a friction surface, which is formed on the second cam member, to generate friction force. The electromagnetic coil brings the second cam member into contact with the friction engaged member using its magnetic force. The coned disc spring is arranged between the second cam member and the friction engaged member.

In order to transmit torque, the electromagnetic coil is energized to bring the second cam member into contact with the friction engaged member using its magnetic force, and relative rotation between the first cam member and the second cam member is caused by friction force between the second cam member and the friction engaged member. A cam mechanism formed of the first cam surface and the second cam surface is activated by the relative rotation. Then, the second cam member is further strongly pushed against the friction engaged member by thrust force generated by the cam mechanism, and torque is transmitted between the second cam member and the friction engaged member.

On the other hand, in order to interrupt transmission of torque, the electromagnetic coil is de-energized and the second cam member is separated from the friction engaged member by urging force of the coned disc spring. In this way, the cam mechanism is placed in an inactive state, and transmission of torque between the second cam member and the friction engaged member is interrupted.

In the electromagnetic clutch described in JP 2011-144835 A, during transmission of torque, it is necessary to keep generating magnetic force for attracting the second cam member toward the friction engaged member against the urging force of the coned disc spring. Therefore, the amount of electric power consumed by the electromagnetic coil increases in accordance with a duration during which torque is transmitted.

### SUMMARY OF THE INVENTION

It is an object of the invention to provide a more compact electromagnetic clutch in which current is not supplied to an electromagnetic coil during transmission of torque.

An aspect of the invention relates to an electromagnetic clutch that includes: a first cam member that has a first cam surface formed to extend in a circumferential direction; a second cam member that is rotatable relative to the first cam member within a predetermined angular range, and that has a second cam surface that faces the first cam surface; an urging member that urges the second cam member such that the first cam surface and the second cam surface are separated from each other; a friction member that is brought into contact with the second cam member by urging force of the urging member, and that generates friction force between the friction member and the second cam member; and an electromagnetic coil that generates magnetic force with which the second cam member is separated from the friction member against the urging force of the urging member. The first cam surface and the second cam surface generate thrust force by which the second cam member is pushed against the friction member, through relative rotation between the first cam member and the second cam member due to the friction force.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1A is a sectional view showing an electromagnetic clutch according to an embodiment of the invention together with an input rotating member and an output rotating member in a state where torque transmission is allowed;
FIG. 1B is a sectional view showing the electromagnetic clutch according to the embodiment together with the input rotating member and the output rotating member in a state where torque transmission is interrupted;
FIG. 2A and FIG .2B are circumferential sectional views that show an example of the configuration of a first cam surface and a second cam surface, wherein FIG. 2A shows a state where a first cam member and a second cam member are brought close to each other and FIG. 2B shows a state where the first cam member and the second cam member are separated from each other;
FIG. 3 is a plan view showing the second cam member as viewed from a side face side; and
FIG. 4 is a graph showing a temporal change in a coil current that is supplied to an electromagnetic coil.

### DETAILED DESCRIPTION OF EMBODIMENTS

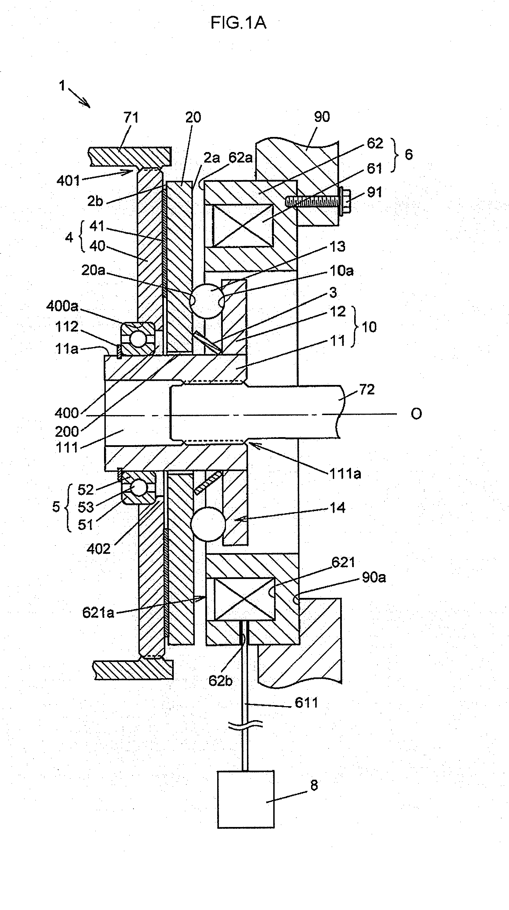

Hereinafter, an electromagnetic clutch 1 according to an embodiment of the invention will be described with reference to FIGs. 1A, 1B, FIGs. 2A, 2B, FIG. 3 and FIG. 4. The electromagnetic clutch 1 is provided on a transmission path along which the torque of an engine is transmitted to one of a plurality of hydraulic pumps provided for a vehicle automatic transmission system that includes, for example, a belt-type CVT.

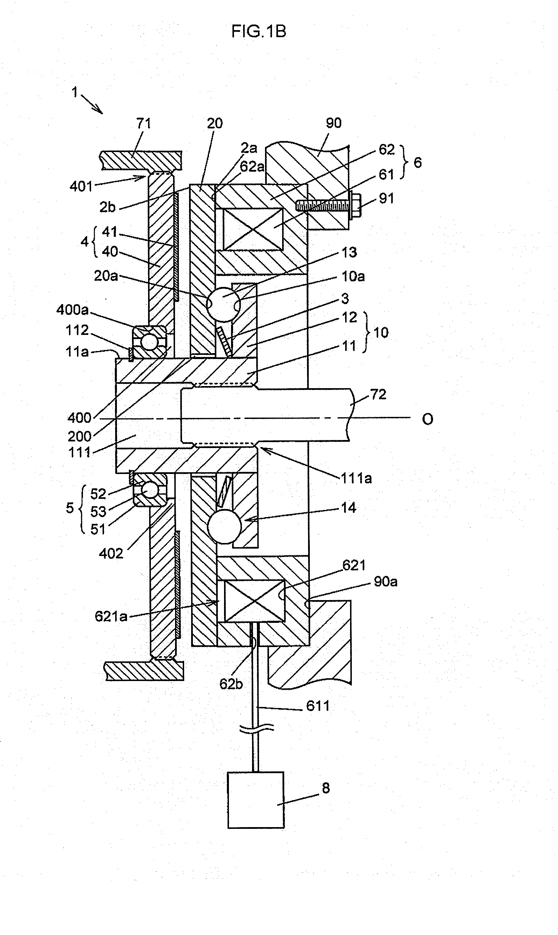

FIG. 1A and FIG. 1B are sectional views showing the electromagnetic clutch 1 according to the present embodiment together with an input rotating member and an output rotating member. FIG. 1A shows a state where torque transmission is allowed. FIG. 1B shows a state where torque transmission is interrupted.

The electromagnetic clutch 1 includes a first cam member 10, a second cam member 20, a coned disc spring 3, a clutch plate 4, a bearing 5, and an electromagnet 6. The first cam member 10 has a plurality of first cam surfaces 10a. The second cam member 20 has a plurality of second cam surfaces 20a that face the respective first cam surfaces 10a. The coned disc spring 3 is an urging member that urges the second cam member 20 such that the first cam surfaces 10a and the second cam surfaces 20a are separated from each other. The clutch plate 4 is a friction member that is brought into contact with the second cam member 20 by the urging force of the coned disc spring 3. The bearing 5 supports the clutch plate 4 such that the clutch plate 4 is rotatable relative to the first cam member 10.

The first cam member 10, the second cam member 20 and the clutch plate 4 have a common rotation axis O, and are rotatable about the same axis relative to the electromagnet 6.

An input rotating member 71 is coupled to the clutch plate 4 so as to be non-rotatable relative to the clutch plate 4. In addition, an output rotating member 72 is coupled to the first cam member 10 so as to be non-rotatable relative to the first cam member 10. The torque of, for example, an engine (not shown) that serves as a drive source of the vehicle is transmitted to the input rotating member 71. The output rotating member 72 is coupled to, for example, a hydraulic pump (not shown) that discharges hydraulic fluid for activating the automatic transmission system.

The first cam member 10 has a shaft portion 11 and a projecting portion 12. The shaft portion 11 has a cylindrical outer periphery 11a. The projecting portion 12 rotates together with the shaft portion 11, and projects radially outward from the shaft portion 11. The first cam surfaces 10a are formed on a face of the projecting portion 12, which faces the second cam member 20. The shaft portion 11 and the projecting portion 12 are coupled to each other by, for example, welding so as to be non-rotatable relative to each other. Note that the shaft portion 11 and the projecting portion 12 may be integrally formed.

A through-hole 111 is formed at the center portion of the shaft portion 11 so as to extend along the rotation axis O. A spline fitting portion 111a is formed on the inner periphery of the shaft portion 11, which defines the through-hole 111. The spline fitting portion 111a is used to couple the output rotating member 72 to the shaft portion 11 such that the output rotating member 72 is non-rotatable relative to the shaft portion 11.

The second cam member 20 is made of a magnetic material, such as iron, and is formed in a disc shape. The second cam member 20 has an insertion hole 200 through which the shaft portion 11 of the first cam member 10 is passed. The second cam member 20 is arranged between the projecting portion 12 of the first cam member 10 and the clutch plate 4. The second cam surfaces 20a (the number of the second cam surfaces 20a is equal to the number of the first cam surfaces 10a) are formed on one side face 2a of the second cam member 20, which faces the projecting portion 12 of the first cam member 10. The second cam surfaces 20a are formed on the side face 2a at portions that face the first cam surfaces 10a.

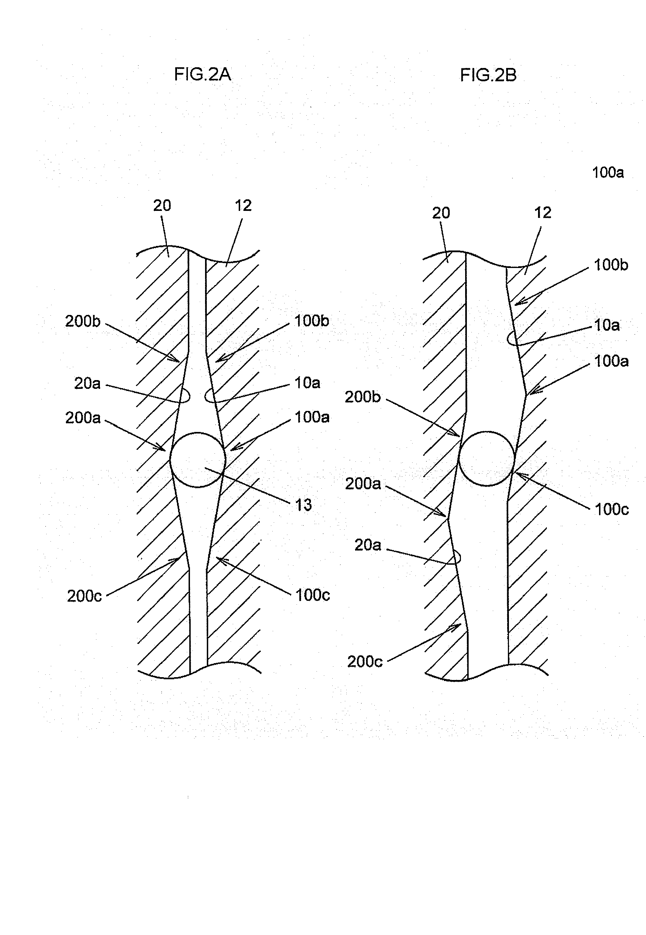

FIG. 2A and FIG. 2B are circumferential sectional views of the first cam member 10 and the second cam member 20, showing an example of the configuration of the first cam surfaces 10a and the second cam surfaces 20a. FIG. 2A shows a state where the first cam member 10 and the second cam member 20 are brought close to each other. FIG. 2B shows a state where the first cam member 10 and the second cam member 20 are separated from each other.

Each first cam surface 10a is formed to extend along the circumferential direction around the rotation axis O, and is formed as a sloped surface of which the axial depth is largest at a center portion 100a in the circumferential direction and the axial depth is gradually reduced from the center portion 100a toward end portions 100b, 100c. In addition, each second cam surface 20a is formed to extend along the circumferential direction around the rotation axis O and to face a corresponding one of the first cam surfaces 10a, and is formed as a sloped surface of which the axial depth is largest at a center portion 200a in the circumferential direction and the axial depth is gradually reduced from the center portion 200a toward end portions 200b, 200c.

A spherical cam ball 13 is arranged between each first cam surface 10a and a corresponding one of the second cam surfaces 20a. Each cam ball 13 is located between the center portion 100a and the center portion 200a as shown in FIG. 2A when the first cam member 10 and the second cam member 20 are closest to each other in the axial direction, and rolls on the first cam surface 10a and second cam surface 20a as shown in FIG. 2B as the first cam member 10 and the second cam member 20 rotate relative to each other. As the cam balls 13 roll, the first cam member 10 and the second cam member 20 are separated from each other in the axial direction.

The first cam surfaces 10a (for example, the six first cam surfaces 10a) are formed on the projecting portion 12 of the first cam member 10. In addition, the second cam surfaces 20a (the number of the second cam surfaces 20a is equal to the number of the first cam surfaces 10a) are formed so as to correspond to the first cam surfaces 10a. The second cam member 20 is rotatable relative to the first cam member 10 within a predetermined angular range corresponding to a circumferential range in which the cam ball 13 rolls on the first cam surface 10a and the second cam surface 20a.

As shown in FIG. 1A and FIG. 1B, the coned disc spring 3 that is an annular elastic member is arranged between the second cam member 20 and the projecting portion 12 of the first cam member 10. One axial end of the coned disc spring 3 contacts the projecting portion 12, and the other axial end of the coned disc spring 3 contacts the side face 2a of the second cam member 20. Thus, the coned disc spring 3 urges the second cam member 20 such that the second cam member 20 is separated from the projecting portion 12 in the axial direction.

The clutch plate 4 has a body portion 40 and a friction member 41. The body portion 40 is made of a magnetic material, such as iron. The friction member 41 is stuck to the body portion 40. The body portion 40 is formed in a disc shape. The body portion 40 has an insertion hole 400 through which the shaft portion 11 of the first cam member 10 is passed. The friction member 41 is stuck to a side face of the body portion 40, which faces the other side face 2b (side face on the opposite side of the second cam member 20 from the side face 2a) of the second cam member 20.

A spline fitting portion 401 is formed on the outer peripheral portion of the body portion 40. The spline fitting portion 401 is spline-fitted to an inner periphery 71a of the input rotating member 71 formed in a cylindrical shape. The clutch plate 4 and the input rotating member 71 are coupled to each other so as to be non-rotatable relative to each other due to the spline fitting portion 401.

The bearing 5 is arranged between an inner periphery 400a of the body portion 40, which defines the insertion hole 400, and the outer periphery 11a of the shaft portion 11 of the first cam member 10. The bearing 5 is, for example, a ball bearing. The bearing 5 includes an outer ring 51, an inner ring 52 and a plurality of balls as rolling elements 53. The outer ring 51 is fitted to the inner periphery 400a. The inner ring 52 is fitted to the outer periphery 11a. The rolling elements 53 are arranged between the outer ring 51 and the inner ring 52. The bearing 5 supports the clutch plate 4 such that the clutch plate 4 is rotatable relative to the first cam member 10.

Axial movement of the inner ring 52 in a direction away from the projecting portion 12 is restricted by a snap ring 112 fixed to the shaft portion 11. In addition, axial movement of the clutch plate 4 in a direction away from the second cam member 20 is restricted by a rib portion 402. The rib portion 402 is formed in the body portion 40 so as to protrude radially inward of the inner periphery 400a. The rib portion 402 faces a side face of the inner ring 52 in the axial direction.

The electromagnet 6 includes an electromagnetic coil 61 and a yoke 62. The yoke 62 has an annular recess 621 that accommodates the electromagnetic coil 61. The yoke 62 is made of, for example, a soft magnetic material, such as soft iron, and has a ring shape. The yoke 62 is arranged radially outward of the projecting portion 12 of the first cam member 10. The yoke 62 is fitted in a recess 90a formed in a support member 90 fixed to, for example, a vehicle body, and is fixed to the support member 90 with a bolt 91.

The recess 621 has an opening 621a at one side (the second cam member 20-side) in the axial direction along the rotation axis O. The electromagnetic coil 61 is fitted in the recess 621 from the opening 621a, and is retained by the yoke 62.

Coil current is supplied from a control unit 8 to the electromagnetic coil 61 via a wire 611 passed through a through-hole 62b formed in the yoke 62. The electromagnetic coil 61 generates magnetic force that separates the second cam member 20 from the clutch plate 4 against the urging force of the coned disc spring 3 when coil current is supplied to the electromagnetic coil 61.

A side face 62a of the yoke 62, at a side at which the opening 621a is formed, faces the side face 2a of the second cam member 20. When current is supplied to the electromagnetic coil 61, the side face 62a of the yoke 62 contacts the side face 2a of the second cam member 20 as shown in FIG. 1B.

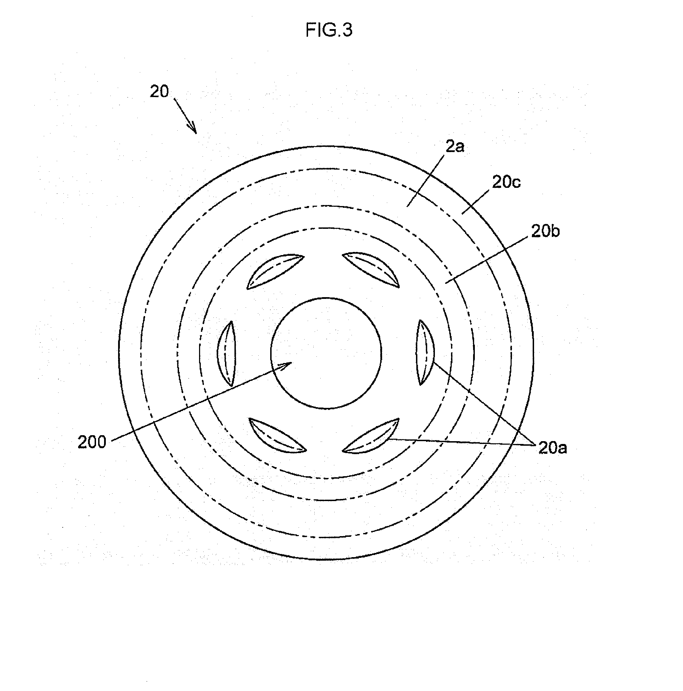

FIG. 3 is a plan view showing the second cam member 20 as viewed from the side face 2a-side. As shown in FIG. 3, an inner contact face 20b and an outer contact face 20c are formed on the second cam member 20. The inner contact face 20b contacts a portion of the side face 62a of the yoke 62, which is radially inward of the opening 621a. The outer contact face 20c contacts a portion of the side face 62a of the yoke 62, which is radially outward of the opening 621a. In FIG. 3, the radially inner and outer boundaries of the inner contact face 20b and the radially inner boundary of the outer contact face 20c are indicated by long dashed double-short dashed lines. The second cam surfaces 20a are formed radially inward of the inner contact face 20b, at equal intervals.

Next, the operation of the electromagnetic clutch 1 will be described. The electromagnetic clutch 1 transmits torque from the input rotating member 71 to the output rotating member 72 in a non-energized state where coil current is not supplied to the electromagnetic coil 61. The electromagnetic clutch 1 interrupts torque transmission from the input rotating member 71 to the output rotating member 72 in an energized state where coil current is supplied to the electromagnetic coil 61.

As shown in FIG. 1A, when the electromagnetic coil 61 is not energized, the coned disc spring 3 pushes the second cam member 20 against the clutch plate 4, and the side face 2b of the second cam member 20 contacts the friction member 41 of the clutch plate 4. Due to this contact, friction force is generated between the clutch plate 4 and the second cam member 20. As the clutch plate 4 rotates relative to the first cam member 10 in this state, the second cam member 20 rotates relative to the first cam member 10 together with the clutch plate 4 due to the friction force.

As shown in FIG. 1A, the cam balls 13 contact the second cam surfaces 20a of the second cam member 20 and the first cam surfaces 10a of the first cam member 10, and the second cam member 20 is further strongly pushed against the clutch plate 4 by a cam mechanism 14 formed of the second cam surfaces 20a, the first cam surfaces 10a and the cam balls 13. That is, the second cam member 20 is pushed against the clutch plate 4 by thrust force generated by the cam mechanism 14 through relative rotation between the first cam member 10 and the second cam member 20.

A pushing force F, which acts on the second cam member 20 and with which the second cam member 20 is pushed against the clutch plate 4, is a value that is obtained by multiplying an urging force F₁ of the coned disc spring 3 by an amplification factor k determined by the cam angle, effective radius, and the like, of each of the second cam surfaces 20a and the first cam surfaces 10a (F = k×F₁).

As described above, the clutch plate 4 and the second cam member 20 are frictionally engaged with each other, and torque is transmitted from the clutch plate 4 to the second cam member 20. In addition, the second cam member 20 and the first cam member 10 are rotatable relative to each other only in the range in which each of the cam balls 13 rolls on the corresponding first cam surface 10a and second cam surface 20a. Therefore, the first cam member 10 and the second cam member 20 rotate together with each other while maintaining the positional relationship shown in FIG. 2B. In this way, torque is transmitted from the input rotating member 71 to the output rotating member 72.

On the other hand, when coil current is supplied to the electromagnetic coil 61, the second cam member 20 is separated from the clutch plate 4 by the magnetic force of the electromagnet 6. That is, the electromagnetic coil 61 generates magnetic force for separating the second cam member 20 from the clutch plate 4 against the urging force of the coned disc spring 3.

A magnetic force (electromagnetic attraction force that acts on the second cam member 20) F2 required to separate the second cam member 20 from the clutch plate 4 needs to be larger than the urging force F₁ of the coned disc spring 3. That is, the pushing force F, which acts on the second cam member 20 and with which the second cam member 20 is pushed against the clutch plate 4, is expressed by the equation F = k×(F₁-F₂). Therefore, irrespective of the degree of the amplification coefficient k, as long as F₁ < F₂, it is possible to separate the second cam member 20 from the clutch plate 4 and attracts the second cam member 20 to the yoke 62.

When the second cam member 20 and the clutch plate 4 are separated from each other, no friction force is generated between the second cam member 20 and the clutch plate 4. Therefore, the clutch plate 4 is rotatable relative to the first cam member 10 and the second cam member 20, so torque transmission from the input rotating member 71 to the output rotating member 72 is interrupted.

In addition, in the present embodiment, after the second cam member 20 is attracted to the yoke 62, coil current that is supplied from the control unit 8 to the electromagnetic coil 61 is reduced for the following reason. When the second cam member 20 is in contact with the clutch plate 4, the distance between the side face 62a of the yoke 62 and the side face 2a of the second cam member 20, which is on the yoke 62-side, is large and therefore strong magnetic force is required. On the other hand, after the second cam member 20 is attracted to the yoke 62, the clearance between the second cam member 20 and the yoke 62 is substantially eliminated and therefore it is possible to maintain the state where the second cam member 20 is attracted to the yoke 62 with relatively weak magnetic force.

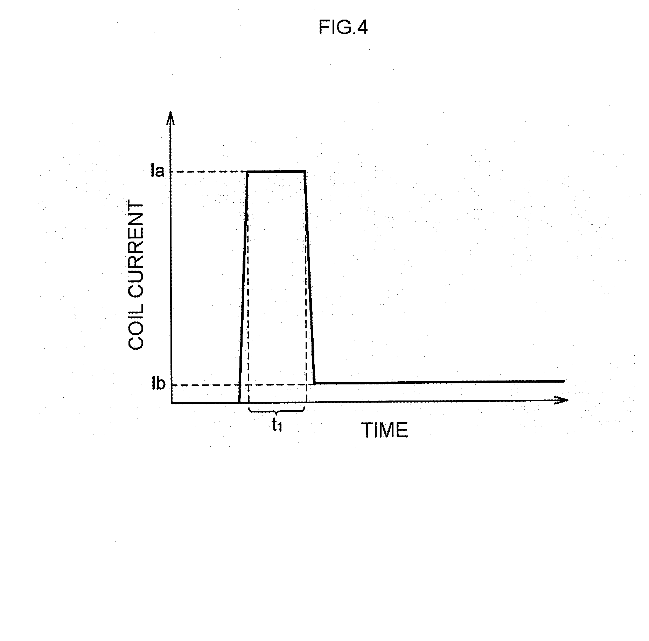

FIG. 4 is a graph that shows an example of a temporal change in coil current that is supplied to the electromagnetic coil 61. Immediately after the start of current supply to the electromagnetic coil 61, large coil current (Ia) is supplied in order to separate the second cam member 20 from the clutch plate 4. After the second cam member 20 is attracted to the yoke 62, reduced coil current (Ib) is supplied (Ia > Ib).

Reduction in coil current may be temporally controlled with the use of, for example, a timer of the control unit 8. More specifically, when the control unit 8 receives a command signal indicating that torque transmission should be interrupted, the large coil current (Ia) is promptly supplied to the electromagnetic coil 61. After that, coil current is reduced after a lapse of a predetermined period of time t₁ (for example, 0.5 seconds). After that, while torque transmission is interrupted, supply of the reduced coil current (Ib) is continued. The coil current (Ib) for maintaining the state where the second cam member 20 is attracted to the yoke 62 is smaller than or equal to 10% of the coil current (Ia) for separating the second cam member 20 from the clutch plate 4.

With the electromagnetic clutch 1 according to the above-described embodiment, the following advantageous effects are obtained.

(1) Because torque is transmitted while current is not supplied to the electromagnetic coil 61, it is possible to eliminate power consumption by the electromagnetic coil 61 during torque transmission. Therefore, for example, when the proportion of a duration during which torque is transmitted is higher than the proportion of a duration during which torque is not transmitted, the electromagnetic clutch 1 consumes less power than an electromagnetic clutch that is configured such that current is supplied to an electromagnetic coil when torque is transmitted.

(2) The second cam member 20 receives thrust force with which the second cam member 20 is pushed against the clutch plate 4 through relative rotation between the second cam member 20 and the first cam member 10. Therefore, the second cam member 20 is pushed against the clutch plate 4 by force larger than the urging force of the coned disc spring 3, and friction force between the second cam member 20 and the clutch plate 4 increases. In this way, it is possible to increase torque transmission capacity while suppressing an increase in the size of the electromagnetic clutch 1.

(3) The second cam member 20 and the clutch plate 4 each have a disc shape, and have the insertion hole 200 and the insertion hole 400 formed at their center portions, respectively. Further, the shaft portion 11 of the first cam member 10 is passed through the insertion holes 200, 400, and the second cam member 20 and the clutch plate 4 are arranged coaxially. Therefore, it is possible to reduce the size of the electromagnetic clutch 1.

(4) The projecting portion 12 of the first cam member 10 is arranged radially inward of the yoke 62 of the electromagnet 6, and the cam balls 13 and the coned disc spring 3 are arranged between the projecting portion 12 and the second cam member 20. That is, the coned disc spring 3, the cam balls 13 and the yoke 62 are aligned in the radial direction that is perpendicular to the rotation axis O. Therefore, it is possible to further reduce the size of the electromagnetic clutch 1.

(5) The current that is supplied to the electromagnetic coil 61 is reduced after the second cam member 20 is attracted to the yoke 62. Therefore, it is possible to reduce power consumption by the electromagnetic clutch 1.

The electromagnetic clutch according to the invention has been described on the basis of the above-described embodiment. However, the invention is not limited to the above-described embodiment. The invention may be implemented in various other embodiments without departing from the scope of the invention.

For example, in the above-described embodiment, the electromagnetic clutch 1 is configured to transmit torque from the input rotating member 71 to the output rotating member 72. However, the direction in which torque is transmitted is not limited to this direction. The direction in which torque is transmitted may be opposite to the above-described direction.

In addition, there may be employed a configuration in which the first cam member 10 is coupled to the support member 90 so as to be non-rotatable relative to the support member 90 and the rotation of the clutch plate 4 (input rotating member 71) is stopped by friction force while current is not supplied to the electromagnetic coil 61. In this case, the electromagnetic clutch 1 functions as an electromagnetic brake.

In addition, in the above-described embodiment, the clutch plate 4 has the friction member 41; however, the clutch plate 4 is not limited to this configuration. The clutch plate 4 need not have the friction member 41. In this case, the second cam member 20 contacts the body portion 40. Note that, when the clutch plate 4 does not have the friction member 41, it is desirable that a sliding portion at which the second cam member 20 and the clutch plate 4 slide with respect to each other be subjected to heat treatment, or the like, for suppressing friction.

In addition, in the above-described embodiment, the cam balls 13 are interposed between the first cam surfaces 10a and the second cam surfaces 20a. However, the invention is not limited to this configuration. The first cam surfaces 10a may directly slide over the second cam surfaces 20a. In this case, the first cam surfaces 10a and the second cam surfaces 20a are formed so as to be inclined at the same angle in the same direction with respect to the circumferential direction and parallel to each other.

In addition, in the above-described embodiment, the clutch plate 4 is coupled to the input rotating member 71 by the spline fitting portion 401 formed on its outer peripheral side, and the first cam member 10 is coupled to the output rotating member 72 by the spline fitting portion 111a formed on the inner face of the shaft portion 11, which defines the through-hole 111. However, the invention is not limited to this configuration. Any configuration may be employed as long as the clutch plate 4 and the input rotating member 71 are coupled to each other so as to rotate together with each other and the first cam member 10 and the output rotating member 72 are coupled to each other so as to rotate together with each other.

In addition, usage and application target of the electromagnetic clutch 1 are also not limited to those described in the above-described embodiment.

According to the invention, it is possible to provide a more compact electromagnetic clutch in which current is not supplied to an electromagnetic coil during torque transmission.
An electromagnetic clutch includes: a first cam member having a first cam surface; a second cam member having a second cam surface facing the first cam surface; a coned disc spring that urges the second cam member such that the first and second cam surfaces are separated from each other; a clutch plate that contacts the second cam member due to urging force of the urging member, and generates friction force between the clutch plate and the second cam member; and an electromagnetic coil that generates magnetic force with which the second cam member is separated from the clutch plate against the urging force of the urging member. The first cam surface and the second cam surface generate thrust force by which the second cam member is pushed against the friction member, through relative rotation between the first cam member and the second cam member due to the friction force.

## Claims

1. An electromagnetic clutch, comprising:
a first cam member that has a first cam surface formed to extend in a circumferential direction;
a second cam member that is rotatable relative to the first cam member within a predetermined angular range, and that has a second cam surface that faces the first cam surface;
an urging member that urges the second cam member such that the first cam surface and the second cam surface are separated from each other;
a friction member that is brought into contact with the second cam member by urging force of the urging member, and that generates friction force between the friction member and the second cam member; and
an electromagnetic coil that generates magnetic force with which the second cam member is separated from the friction member against the urging force of the urging member, wherein
the first cam surface and the second cam surface generate thrust force by which the second cam member is pushed against the friction member, through relative rotation between the first cam member and the second cam member due to the friction force.

2. The electromagnetic clutch according to claim 1, wherein:
the first cam member has a shaft portion that has a cylindrical outer periphery and a projecting portion that projects radially outward from the shaft portion and that has the first cam surface; and
the friction member has an insertion hole through which the shaft portion of the first cam member is passed, and is supported by a bearing arranged between an inner periphery of the friction member, which defines the insertion hole, and the outer periphery of the shaft portion, so as to be rotatable relative to the first cam member.

3. The electromagnetic clutch according to claim 2, wherein:
the second cam member has an insertion hole through which the shaft portion of the first cam member is passed, and is arranged between the friction member and the projecting portion of the first cam member; and
the urging member is an elastic member arranged between the projecting portion of the first cam member and the second cam member.

4. The electromagnetic clutch according to any one of claims 1 to 3, wherein:
the first cam member, the second cam member and the friction member are rotatable relative to the electromagnetic coil;
torque is transmitted between the first cam member and the friction member while current is not supplied to the electromagnetic coil; and
transmission of torque between the first cam member and the friction member is interrupted while current is supplied to the electromagnetic coil.

5. The electromagnetic clutch according to any one of claims 1 to 4, wherein current that is supplied to the electromagnetic coil is reduced after the second cam member is separated from the friction member.
